(19) Europäisches Patentamt
European Patent Office
Office européen des brevets

(11) Veröffentlichungsnummer: **0 376 138 B1**

# (12) EUROPÄISCHE PATENTSCHRIFT

(45) Veröffentlichungstag der Patentschrift: **19.01.94**

(51) Int. Cl.5: **C08F 220/18**, C10L 1/18, C10L 1/20, C10L 1/22

(21) Anmeldenummer: **89123521.0**

(22) Anmeldetag: **20.12.89**

## (54) Neue Copolymere, deren Mischungen mit Poly(meth)acrylsäureestern und deren Verwendung zur Verbesserung der Fliessfähigkeit von Rohölen in der Kälte.

(30) Priorität: **24.12.88 DE 3843922**

(43) Veröffentlichungstag der Anmeldung: **04.07.90 Patentblatt 90/27**

(45) Bekanntmachung des Hinweises auf die Patenterteilung: **19.01.94 Patentblatt 94/03**

(84) Benannte Vertragsstaaten: **DE**

(56) Entgegenhaltungen:
**EP-A- 0 113 138**
**EP-A- 0 120 512**
**EP-A- 0 294 648**
**EP-A- 0 309 317**
**DE-B- 1 003 896**
**FR-A- 1 076 398**
**FR-A- 2 207 975**
**GB-A- 573 364**
**GB-A- 1 053 163**
**GB-A- 2 189 251**
**US-A- 4 791 167**

(73) Patentinhaber: **HOECHST AKTIENGESELLSCHAFT**
**D-65926 Frankfurt(DE)**

(72) Erfinder: **Wirtz, Herbert, Dr.**
**Michaelstrasse 14**
**D-5300 Bonn 1(DE)**
Erfinder: **von Halasz, Sigmar-Peter, Dr.**
**Die Ritterwiesen 1c**
**D-6237 Liederbach(DE)**
Erfinder: **Feustel, Michael, Dr.**
**Freiherr-vom-Stein-Strasse 35**
**D-6233 Kelkheim(Taunus)(DE)**
Erfinder: **Balzer, Juliane**
**Im Trutz 51**
**D-6000 Frankfurt am Main(DE)**

EP 0 376 138 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Rohöle enthalten je nach Herkunft mehr oder weniger große Anteile an gelösten n-Paraffinen, die eine besondere Problemgruppe darstellen, weil sie bei Erniedrigung der Temperatur auskristallisieren und dadurch zur Verschlechterung der Fließeigenschaften dieser Öle führen können. Diese Kristallisation kann beim Transport durch Rohrleitungen zu Ablagerungen an der Wand und im Extremfall zur völligen Verstopfung der Pipeline führen. Daneben können Paraffinausfällungen auch bei Förderung, Lagerung und Weiterverarbeitung zu Komplikationen führen.

Die Paraffinabscheidung beginnt mit der Bildung von Mikrokristallen in Form feiner Plättchen und Nadeln, die Viskosität des Rohöls steigt deutlich an. Wenn diese Mikrokristalle zu einem dreidimensionalen Netzwerk zusammenwachsen, verliert das Rohöl seine Fließfähigkeit und erstarrt schließlich. Der Erstarrungspunkt heißt auch Stockpunkt (pour point) und ist abhängig von der Menge und Verteilung der im Öl gelösten Paraffine.

Zur Wiederherstellung oder Aufrechterhaltung der Fließfähigkeit gibt es eine Reihe von Maßnahmen thermischer oder mechanischer Art - z. B. das Abkratzen des Paraffins von der Rohrinnenwandung oder das Beheizen ganzer Pipelines. Eleganter ist sicherlich die ursächliche Bekämpfung des Phänomens durch Zugabe sog. Stockpunkterniedriger (Paraffininhibitoren, pour point depressants) meist in Mengen von einigen Hundert ppm.

Die Wirkung eines Paraffininhibitors beruht darauf, daß er mit den Paraffinen cokristallisiert, also den Aufbau des regulären Kristallgefüges stört. Gleichzeitig stellen die hochmolekularen Inhibitormoleküle Kristallisationskeime dar, so daß die Zahl der primär gebildeten Mikrokristalle vergrößert wird. Polare Gruppen innerhalb des Inhibitormoleküls verhindern schließlich ein Zusammenwachsen der Kristalle zu einem Netzwerk. Der Paraff ininhibitor verändert also nicht die Menge des auskristallisierenden Paraffins, sondern Größe und Polarität der Kristalle. Die Folge ist die Absenkung des Stockpunktes und Aufrechterhaltung der Fließfähigkeit des Öls über einen weiteren Temperaturbereich.

Bei den Paraffininhibitoren handelt es sich im allgemeinen um Homo- und Copolymere auf Basis von Olefinen, (Meth)acrylsäureestern, Maleinsäurederivaten und bestimmten Vinylmonomeren. So sind z. B. in DOS 2 264 328 Homopolymere von Acrylaten mit 18 bis 24 C-Atomen im Alkoholrest für die Anwendung als Stockpunkterniedriger beansprucht.

In EP 0 120 512 sind Copolymere aus langkettigen Acrylsäureestern und Comonomeren wie Styrol, t-Butylstyrol, Acrylnitril, Acrylamid oder Vinylpyridin für den gleichen Einsatzzweck beschrieben.

In US 4 547 202 schließlich werden für Rohöle und Rückstandsöle Copolymere aus langkettigen Acrylsäureestern und bestimmten Vinylidenkomponenten beansprucht.

Nachteilig ist bei allen angegebenen Substanzen die noch nicht ausreichende Wirksamkeit und die dadurch resultierenden hohen Einsatzkonzentrationen.

Es werden deshalb neue Copolymere gesucht, die verbesserte Eigenschaften als stockpunkterniedriger aufweisen und auch bei niedriger Dosierung noch genügende Wirksamkeit aufweisen.

Überraschenderweise wurde nun gefunden, daß mit den im folgenden beschriebenen Copolymeren und insbesondere deren Mischungen mit Poly(meth)acrylaten eine deutliche Erniedrigung des Stockpunkts von Rohölen erreicht werden kann.

Gegenstand der vorliegenden Erfindung sind Copolymere aus 50 bis 99,9 Gew.-% eines (Meth)-acrylsäure-$C_{14}$-$C_{22}$-alkylesters und 50 bis 0,1 Gew.-% eines Comonomeren der Formel 1

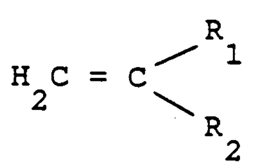

(1)

wobei $R_1$ Wasserstoff oder Methyl,
$R_2$ eine Gruppe der Formeln

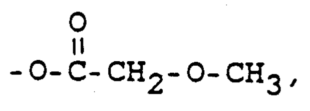, 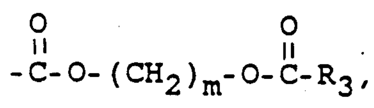,

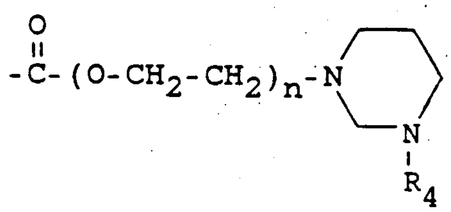, 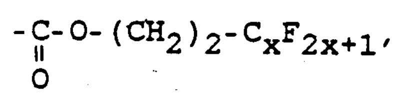,

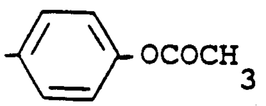, $-CH_2-O-C_2HF_4$, 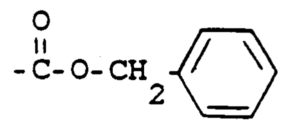 oder

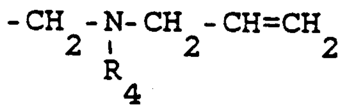,

$R_3$ $C_1$-$C_{80}$-Alky, $C_2$-$C_{80}$-Alkenyl, $C_5$- oder $C_6$-Cycloalkyl oder Cycloalkenyl, die durch Alkylgruppen substituiert sein können, Aralkyl, Alkaryl oder den Rest einer Dimerfettsäure, der Maleinsäure, der Bernsteinsäure oder einer $C_6$-$C_{22}$-Alkenylbernsteinsäure,

$R_4$ $C_1$-$C_{80}$-Alkyl, $C_1$-$C_{80}$-Alkenyl, $C_5$- oder $C_6$-Cycloalkyl oder Cycloalkenyl, die durch Alkylgruppen substituiert sein können, Aryl, Aralkyl oder Alkaryl,

$R_5$ $C_6$-$C_{20}$-Alkyl,

m 2 oder 3

n eine Zahl von 1 bis 30 und

x eine Zahl von 2 bis 20 bedeuten,

und Mischungen dieser Copolymeren mit Poly(meth)acrylsäure-$C_{14}$-$C_{22}$-alkylestern.

Bevorzugt sind solche Comonomeren, bei denen $R_3$ und $R_4$ $C_{6-36}$-Alkyl, $C_6$-$C_{36}$-Alkenyl, Cyclohexyl, Cyclohexenyl, Naphthenyl, Phenyl, Benzyl, $C_1$-$C_4$-Mono-, Di- oder Tri-alkylphenyl oder $R_3$ auch den Rest einer Dimerfettsäure, der Maleinsäure, der Bernsteinsäure oder einer $C_6$-$C_{18}$-Alkenylbernsteinsäure und x Zahlen von 4 bis 16 bedeuten.

Weiterhin sind Gegenstand der Erfindung Polymermischungen aus 10 bis 90 Gew.-% eines Poly(meth)-acrylsäure-$C_{14}$-$C_{22}$-alkylesters (B) und 90 bis 10 Gew.-% eines obengenannten Copolymeren (A). Bevorzugt sind Mischungsverhältnisse A : B von 20 bis 40 Gew.-% Polymer A und 80 bis 60 Gew.-% B Polymer B.

Die oben genannten Copolymeren (A) und deren Mischungen mit den Poly(meth)acrylsäure-$C_{14}$-$C_{22}$-alkylestern (B) eignen sich sehr gut zur Verbesserung der Fließfähigkeit von Rohölen. Darüberhinaus wurde gefunden, daß sich auch solche Copolymeren (A) und deren Mischungen mit den Poly(meth)-acrylsäureestern (B) zur Verbesserung der Fließfähigkeit von Rohölen eignen, bei denen das Copolymer (A) solche Monomeren der obigen Formel (1) enthält, worin $R_2$ zusätzlich eine Gruppe der Formeln

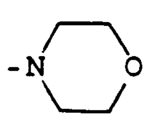, 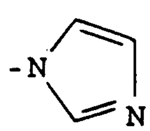 oder 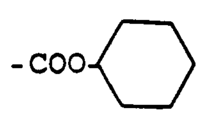

bedeutet.

Die Herstellung der beschriebenen Polymeren erfolgt nach üblichen Verfahren in Lösung eines aromatischen Kohlenwasserstoffs, Kohlenwasserstoffgemisches oder eines n-Paraffins bei 50 - 100 °C und mit den für radikalische Polymerisationen üblichen Startern. Der Gewichtsanteil der Monomeren liegt dabei zwischen 50 und 90 %.

In einigen Fällen können die Polymere auf zwei Wegen hergestellt werden, und zwar für den Fall der acylierten Hydroxyalkylacrylate. Einerseits lassen sich die Hydroxyalkylacrylate direkt mit den (Meth)-

acrylsäureestern copolymerisieren und anschließend auf dem üblichen Weg verestern, andererseits kann man auch zunächst den monomeren Diester herstellen und anschließend copolymerisieren. Wegen der unterschiedlichen Reaktivitäten resultieren aus beiden Herstellverfahren unterschiedliche Molekulargewicht-Verteilungen. Welches der Copolymere den größeren Effekt zeigt, ist dann abhängig von der Zusammensetzung des Rohöls.

Die beschriebenen Polymeren und Polymermischungen zeichnen sich durch eine breite Wirksamkeit aus und ermöglichen eine Verbesserung der Fließeigenschaften bei vielen Rohölen bei Einsatzmengen von 10 - 1 000 ppm.

Die folgenden Beispiele sollen die Erfindung erläutern, ohne sie einzuschränken.

## I. Herstellung der Monomeren

Im folgenden soll die Herstellung einiger Monomeren beschrieben werden, sofern es sich nicht um gängige Handelsprodukte handelt.

### Beispiel 1

### Herstellung von Acrylsäure-(2-naphthenoyloxyethyl)ester

In einem 1 l-Vierhalskolben mit Rührer, Kontaktthermometer und Rückflußkühler sowie Gaseinleitungsrohr werden 148 g (0,5 mol) Naphthensäure in 200 g Toluol vorgelegt und auf 50 °C gebracht. Dazu tropft man über 30 min 59,5 g (0,5 mol) Thionylchlorid und hält nach beendeter Zugabe noch eine Stunde unter Rückfluß. Man läßt wieder auf 50 °C abkühlen und gibt unter Durchleiten von Stickstoff über einen Zeitraum von 30 min eine Lösung von 58 g (0,5 mol) Hydroxyethylacrylat in 58 g Toluol zu. Nach beendeter Zugabe hält man 4 h bei 60 °C und leitet während dieser Zeit einen kräftigen Stickstoffstrom durch die Lösung. Toluol wird bei 75 °C und 20 Torr entfernt. Man erhält so 98 g (Ausbeute quantitativ) eines braunen Öls.

Analog dazu können die anderen beanspruchten Ester aus Hydroxypropyl(meth)acrylat hergestellt werden.

Soll die nachfolgende Polymerisation in aromatischen Hochsiedern oder n-Paraffinen erfolgen, so kann die Veresterung auch direkt in diesen Lösungsmitteln erfolgen. Die Destillation des Lösungsmittels entfällt dann naturgemäß.

### Beispiel 2

### Herstellung von Acrylsäurebenzylester

In einem 1 l-Vierhalskolben mit Rührer, Kontaktthermometer, Wasserabscheider und Gaseinleitungsrohr werden 144 g (2 mol) Acrylsäure, die mit 1,4 g Hydrochinonmonomethylether inhibiert sind, in 139 g eines aromatischen Hochsiedergemisches gelöst. Dazu gibt man 3,2 g p-Toluolsulfonsäure, heizt auf 70 °C und läßt bei dieser Temperatur über einen Zeitraum von 10 min 216 g (2 mol) Benzylalkohol zulaufen. Nach beendeter Zugabe wird zum Rückfluß erhitzt. Zur Beschleunigung des Wasseraustrags wird Luft durch die Lösung geleitet. Die Reaktion ist nach ca. 5 h beendet. Der Reaktionsfortschritt wird über die Säurezahl verfolgt. Aus dieser ergibt sich nach 5 h ein Umsatz von ca. 97 %.

Ebenso werden nach dieser Vorschrift die n-Alkyl(meth)acrylate und Cyclohexylacrylate hergestellt.

### Beispiel 3

### Herstellung von 1-Acryloyloxyethyl-3-Talgfettalkylhexahydropyrimidin

In einem 6 l-Vierhalskolben mit Rührer, Kontaktthermometer und Wasserabscheider werden 1 000 g (2,90 mol) Talgfettalkylpropylendiamin in 1 500 ml Toluol gelöst. Dazu gibt man bei Raumtemperatur portionsweise 86,95 g (2,90 mol) Paraformaldehyd. Auf Schaumbildung ist dabei zu achten. Nach beendeter Zugabe wird 6 h am Wasserabscheider gekocht. Insgesamt werden dabei 51 ml Wasser abgeschieden. Nach beendeter Reaktion wird das Lösungsmittel im Vakuum entfernt. Man erhält 1 030 g einer hellgelben Paste, die anschließend nach den üblichen Verfahren bei 130 °C oxethyliert wird. Zur Veresterung mit Acrylsäure wird das so erhaltene Oxethylat vom Molekulargewicht 410, entsprechend 1,2 mol Ethylenoxid/Mol zusammen mit 181 g (25 mol) Acrylsäure in 500 g Toluol gelöst, mit 1 g p-Toluolsulfonsäure versetzt und 5 h bei 110 - 130 °C am Wasserabscheider erhitzt. Insgesamt scheiden sich 34 g Wasser ab

(ca. 75 % d. Theorie). Im Anschluß wird das Lösungsmittel im Vakuum entfernt. Die so erhaltene Rohware wurde für die Copolymerisationen nicht weiter gereinigt.

## II. Herstellung der Polymeren

### Beispiel 1

In einem 1 l-Vierhalskolben, ausgestattet mit wandgängigem Rührer, Rückflußkühler, Kontaktthermometer, Gaseinleitungsrohr und Tropftrichter werden 168 g (0,30 mol) eines analog zu Beispiel I.2 hergestellten Stearylacrylats, 58 %ig in Toluol, und 3,3 g (0,028 mol) Hydroxyethylacrylat zusammen mit 1,0 g Dodecylmercaptan vorgelegt. Bei einer Innentemperatur von 60 °C gibt man dazu unter Durchleiten von Stickstoff über einen Zeitraum von 30 min eine Lösung von 0,5 g Azo-bis(isobutyronitril) in 27 g Toluol. Nach Abklingen der exothermen Reaktion hält man noch 2 h bei 80 °C. Zur Veresterung der freien Hydroxygruppe läßt man bei 50 °C 7,5 g (0,028 mol) Stearinsäurechlorid zutropfen und rührt noch solange bei dieser Temperatur, bis sich kein Chlorwasserstoff mehr entwickelt. Man erhält so ein hellbraunes Copolymer, das mit Toluol auf 50 % Feststoffgehalt eingestellt wird.
K-Wert (5 %ig in Toluol/25 °C) nach Ubbelohde: 19,8.

### Beispiel 2

Wie im Beispiel II.1 werden 135 g (0,29 mol) 58 %iges Stearylacrylat zusammen mit 9,5 g (0,026 mol) eines in Analogie zu Beispiel I.1 hergestellten Acrylsäure(2-stearoyloxyethyl)-esters bei 50 °C vorgelegt. Nach Zugabe von 0,5 g Azo-bis(isobutyronitril) in 16 g Toluol wird jeweils 1 h bei 50, 60, 70, 80 und 90 °C (Badtemperatur) erhitzt. Man erhält so ein hellbraunes Copolymer, das mit Toluol auf einen Feststoffgehalt von 50 % einstellt wird.
K-Wert (5 %ig in Toluol/25 °C) nach Ubbelohde: 48,9.

Entsprechend verlaufen auch die Polymerisationen mit den Acetyl- und Naphthenoylderivaten.

### Beispiel 3

Wie im Beispiel II.1 werden 75 g (0,178 mol) 60 %iges $C_{12}$-$C_{14}$-Alkylacrylat in Toluol mit 45 g (0,38 mol) Methoxyessigsäurevinylester copolymerisiert. Als Starter dient eine Lösung von 0,5 g Azo-bis-(isobutyronitril) in 10 g Toluol. Man hält jeweils 1 h bei 50, 60, 70, 80 und 90 °C und erhält so ein gelbes Polymer vom K-Wert 31,5.

### Beispiel 4

Wie im Beispiel II.1 werden 11,7 g (0,35 mol) Stearylacrylat in $C_{12}$-$C_{16}$-n-Paraffin zusammen mit 11,7 g (0,025 mol) 1-Acryloyloxyethyl-3-Talgfettalkylhexahydropyrimidin copolymerisiert. Als Starter dienen 1 g tert.-Butylperpivalat, gelöst in 20 g $C_{12}$-$C_{16}$-n-Paraffin. Insgesamt soll die Lösung 50 %ig an Monomeren nicht unterschreiten. Unter Einhaltung des in den Beispielen II.2 und II.3 beschriebenen Temperaturprofils erhält man ein hochviskoses hellbraunes Produkt vom K-Wert 45,40.

In Analogie zu den in den Beispielen II.2, II.3 und II.4 beschriebenen Verfahren können langkettige Acrylate mit den folgenden in der Tabelle aufgeführten Monomeren copolymerisiert werden. Die Molverhältnisse und die K-Werte sind für einige typische Polymere aufgelistet.

| Monomer I<br>$CH_2=CHCOR$<br>‖<br>O | Monomer II | Mol-<br>verhältnis | K-Wert | Beispiel |
|---|---|---|---|---|
| $R=C_{18}H_{37}$ | 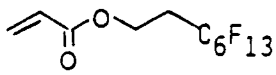 | 97 : 3 | 40,3 | 5 |
| $R=C_{18}H_{37}$ | 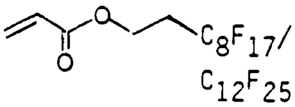 | 95 : 5 | 44,8 | 6 |
| $R=C_{18}H_{37}$ | 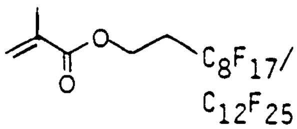 | 95 : 5 | 48,1 | 7 |
| $R=C_{18}H_{37}$ | 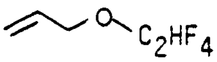 | 99,5 : 0,5 | 44,3 | 8 |
| $R=C_{18}H_{37}$ | 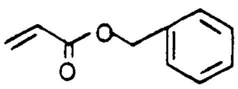 | 90 : 10 | 37,8 | 9 |
| $R=C_{18}H_{37}$ | 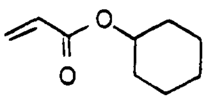 | 90 : 10 | 39,2 | 10 |
| $R=C_{18}H_{37}$ | 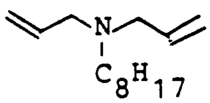 | 99 : 1 | 34,1 | 11 |
| $R=C_{18}H_{37}/$<br>$C_{22}H_{43}$ | 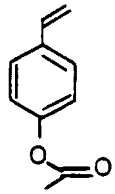 | 99 : 1 | 34,5 | 12 |
| $R=C_{18}H_{37}$ | 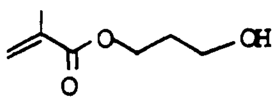 | 99 : 1 | 24,5 | 13 |
| $R=C_{18}H_{37}/$<br>$C_{22}H_{43}$ | 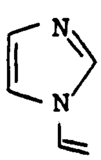 | 90 : 10 | 36,3 | 14 |

Die Wirksamkeit der untersuchten Copolymerisate wird durch die Bestimmung des pour points beschrieben. Die Durchführung erfolgt nach DIN ISO 3016. Danach wird nach vorangehender Aufwärmung die Probe unter festgelegten Bedingungen abgekühlt und in Temperaturabständen von je 3°C auf Fließfähigkeit geprüft.

Mit den erfindungsgemäßen Verbindungen und Mischungen wurde in einem indischen Öl, das einen Stockpunkt in unbehandelten Proben von 29°C aufweist, Stockpunktsmessungen vorgenommen. Die Resultate sind in der folgenden Tabelle zusammengefaßt:

| Produkt | Einsatz (ppm) | Stockpunkt (°C) |
|---|---|---|
| Polymer nach Beispiel 1 | 300 | 21 |
| Polymer nach Beispiel 1 | 500 | 17 |
| Mischung aus 20 % Polymer nach Beispiel 1 und 80 % Polyacrylsäure-$C_{18}$-$C_{22}$-alkylester | 300 | 12,5 |
| " | 500 | 10 |
| Polymer nach Beispiel 2 | 300 | 20,5 |
| Polymer nach Beispiel 2 | 500 | 18 |
| Mischung aus 20 % Polymer nach Beispiel 2 und 80 % Polyacrylsäure-$C_{18}$-$C_{22}$-alkylester | 300 | 12 |
| " | 500 | 11 |
| Polymer nach Beispiel 3 | 300 | 29 |
| Polymer nach Beispiel 3 | 500 | 25 |
| Mischung aus 20 % Polymer nach Beispiel 3 und 80 % Polyacrylsäure-$C_{18}$-$C_{22}$-alkylester | 300 | 20 |
| " | 500 | 15,5 |
| Polymer nach Beispiel 4 | 300 | 21 |
| Polymer nach Beispiel 4 | 500 | 19,5 |
| Mischung aus 20 % Polymer nach Beispiel 4 und 80 % Polyacrylsäure-$C_{18}$-$C_{22}$-alkylester | 300 | 15 |
| " | 500 | 17 |

| Produkt | Einsatz (ppm) | Stockpunkt (°C) |
|---|---|---|
| Polymer nach Beispiel 5 | 300 | 19 |
| Polymer nach Beispiel 5 | 500 | 17 |
| Mischung aus 20 % Polymer nach Beispiel 5 und 80 % Polyacrylsäure-$C_{18}$-$C_{22}$-alkylester | 300 | 11 |
| " | 500 | 10 |
| Polymer nach Beispiel 6 | 300 | 20 |
| Polymer nach Beispiel 6 | 500 | 18 |
| Mischung aus 20 % Polymer nach Beispiel 6 und 80 % Polyacrylsäure-$C_{18}$-$C_{22}$-alkylester | 300 | 13 |
| " | 500 | 12,5 |
| Polymer nach Beispiel 7 | 300 | 19 |
| Polymer nach Beispiel 7 | 500 | 17,5 |
| Mischung aus 20 % Polymer nach Beispiel 7 und 80 % Polyacrylsäure-$C_{18}$-$C_{22}$-alkylester | 300 | 13,5 |
| " | 500 | 12 |
| Polymer nach Beispiel 8 | 300 | 16,5 |
| Polymer nach Beispiel 8 | 500 | 11 |
| Mischung aus 20 % Polymer nach Beispiel 8 und 80 % Polyacrylsäure-$C_{18}$-$C_{22}$-alkylester | 300 | 10 |
| " | 500 | 7 |
| Polymer nach Beispiel 9 | 300 | 19,5 |
| Polymer nach Beispiel 9 | 500 | 18 |
| Mischung aus 20 % Polymer nach Beispiel 9 und 80 % Polyacrylsäure-$C_{18}$-$C_{22}$-alkylester | 300 | 11,5 |
| " | 500 | 8 |

| Produkt | Einsatz (ppm) | Stockpunkt (°C) |
|---|---|---|
| Polymer nach Beispiel 10 | 300 | 20,5 |
| Polymer nach Beispiel 10 | 500 | 18 |
| Mischung aus 20 % Polymer nach Beispiel 10 und 80 % Polyacrylsäure-$C_{18}$-$C_{22}$-alkylester | 300 | 10,5 |
| " | 500 | 8,5 |
| Polymer nach Beispiel 11 | 300 | 22,5 |
| Polymer nach Beispiel 11 | 500 | 18 |
| Mischung aus 20 % Polymer nach Beispiel 11 und 80 % Polyacrylsäure-$C_{18}$-$C_{22}$-alkylester | 300 | 16,5 |
| " | 500 | 13 |
| Polymer nach Beispiel 12 | 300 | 19 |
| Polymer nach Beispiel 12 | 500 | 16 |
| Mischung aus 20 % Polymer nach Beispiel 12 und 80 % Polyacrylsäure-$C_{18}$-$C_{22}$-alkylester | 300 | 18 |
| " | 500 | 14 |
| Polymer nach Beispiel 13 | 300 | 22 |
| Polymer nach Beispiel 13 | 500 | 18 |
| Mischung aus 20 % Polymer nach Beispiel 13 und 80 % Polyacrylsäure-$C_{18}$-$C_{22}$-alkylester | 300 | 18 |
| " | 500 | 11 |
| Polymer nach Beispiel 14 | 300 | 18 |
| Polymer nach Beispiel 14 | 500 | 16 |
| Mischung aus 20 % Polymer nach Beispiel 14 und 80 % Polyacrylsäure-$C_{18}$-$C_{22}$-alkylester | 300 | 13 |
| " | 500 | 11 |

| | | |
|---|---|---|
| ®Paradyne 70 | 300 | 25,5 |
| | 500 | 23,0 |
| ®Paradyne 85 | 500 | 30,5 |
| ®Shellswim 5 T | 500 | 14,0 |
| ®Shellswim 11 T | 300 | 20,5 |
| | 500 | 14,0 |

Die vier letztgenannten Produkte stellen handelsübliche Fließverbesserer dar.

**Patentansprüche**

1. Copolymere aus
50 bis 99,9 Gew.-% eines (Meth)acrylsäure-$C_{14}$-$C_{22}$-alkylesters und
50 bis 0,1 Gew.-% eines Comonomeren der Formel 1

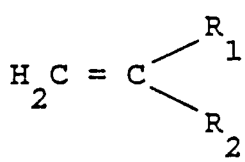

(1)

wobei $R_1$ Wasserstoff oder Methyl,
$R_2$ eine Gruppe der Formeln

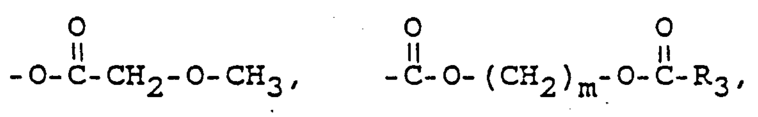

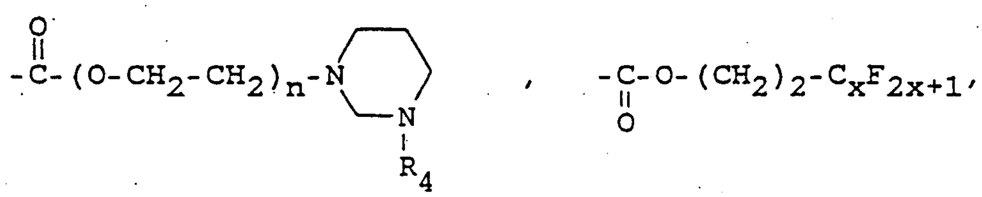

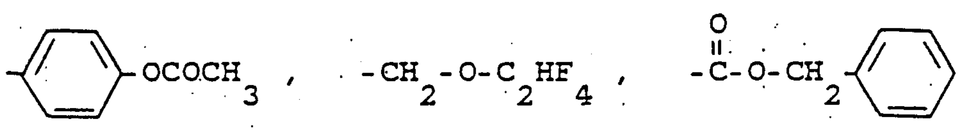

oder

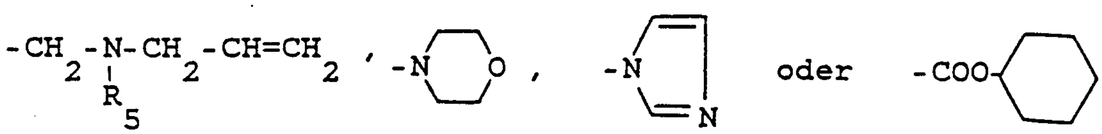

oder

$R_3$ $C_1$-$C_{80}$-Alkyl, $C_2$-$C_{80}$-Alkenyl, $C_5$- oder $C_6$-Cycloalkyl oder Cycloalkenyl, die durch Alkylgruppen substituiert sein können, Aralkyl, Alkaryl oder den Rest einer Dimerfettsäure, der Maleinsäure, der Bernsteinsäure oder einer $C_6$-$C_{22}$-Alkenylbernsteinsäure,

$R_4$ $C_1$-$C_{80}$-Alkyl, $C_1$-$C_{80}$-Alkenyl, $C_5$- oder $C_6$-Cycloalkyl oder Cycloalkenyl, die durch Alkylgruppen substituiert sein können, Aryl, Aralkyl oder Alkaryl,
$R_5$ $C_6$-$C_{20}$-Alkyl,
m 2 oder 3
n eine Zahl von 1 bis 30 und
x eine Zahl von 2 bis 20 bedeuten,
und Mischungen dieser Copolymeren mit Poly(meth)acrylsäure-$C_{14}$-$C_{22}$-alkylestern.

**2.** Copolymere nach Anspruch 1 enthaltend ein Comonomer der Formel (1), worin $R_4$ $C_6$-$C_{36}$-Alkyl, $C_6$-$C_{36}$-Alkenyl, Cyclohexyl, Cyclohexenyl, Naphthenyl, Phenyl, Benzyl, $C_1$-$C_4$-Mono-, Di- oder Tri-alkylphenyl oder $R_3$ auch den Rest einer Dimerfettsäure, der Maleinsäure, der Bernsteinsäure oder einen $C_9$-$C_{18}$-Alkenylbernsteinsäure und x Zahlen von 4 bis 16 bedeuten.

**3.** Mischungen aus 10 bis 90 Gew.-% eines Copolymers nach Anspruch 1 und 90 bis 10 Gew.-% eines Poly(meth)acrylsäure-$C_{14}$-$C_{22}$-alkylesters.

**4.** Mischungen aus 20 bis 40 Gew.-% eines Copolymers nach Anspruch 1 und 80 bis 60 Gew.-% eines Poly(meth)acrylsäure-$C_{14}$-$C_{22}$-alkylesters.

**5.** Verwendung von Copolymeren aus 50 bis 99,9 Gew.-% eines (Meth)acrylsäure-$C_{14}$-$C_{22}$-alkylesters und 50 bis 0,1 Gew.-% eines Comonomeren der Formel 2

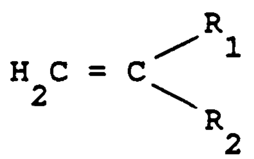 (2)

wobei $R_1$ Wasserstoff oder Methyl,
$R_2$ eine Gruppe der Formeln

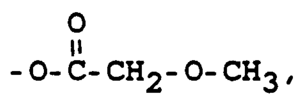 , 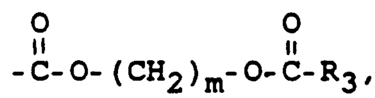 ,

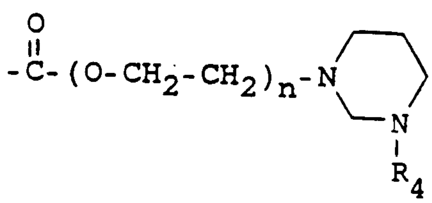 , 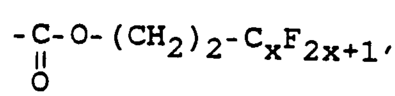 ,

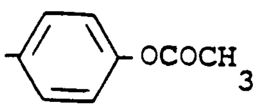 , 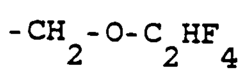 , 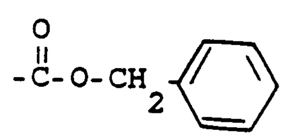 ,

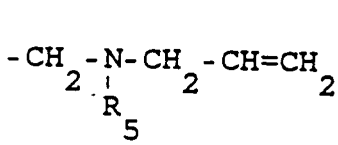 , 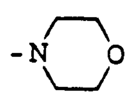 , 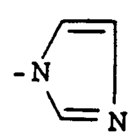 oder 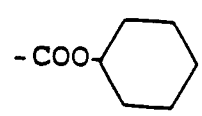

$R_3$ $C_1$-$C_{80}$-Alkyl, $C_2$-$C_{80}$-Alkenyl, $C_5$- oder $C_6$-Cycloalkyl oder Cycloalkenyl, die durch Alkylgruppen substituiert sein können, Aralkyl, Alkaryl oder den Rest einer Dimerfettsäure, der Maleinsäure, der

Bernsteinsäure oder einer $C_6$-$C_{22}$-Alkenylbernsteinsäure,
$R_4$ $C_1$-$C_{80}$-Alkyl, $C_1$-$C_{80}$-Alkenyl, $C_5$- oder $C_6$-Cycloalkyl oder Cycloalkenyl, die durch Alkylgruppen substituiert sein können, Aralkyl oder Alkaryl,
$R_5$ $C_6$-$C_{20}$-Alkyl,
m 2 oder 3,
n eine Zahl von 1 bis 30 und
x eine Zahl von 2 bis 20 bedeuten,
und Mischungen dieser Copolymeren mit Poly(meth)acrylsäure-$C_{14}$-$C_{22}$-alkylestern zur Verbesserung der Fließfähigkeit von Rohölen.

**6.** Verwendung von Copolymeren nach Anspruch 5, enthaltend ein Comonomer der Formel (1), worin $R_3$ und $R_4$ $C_6$-$C_{36}$-Alkyl, $C_6$-$C_{36}$-Alkenyl, Cyclohexyl, Cyclohexenyl, Naphthenyl, Phenyl, Benzyl, $C_1$-$C_4$-Mono, Di- oder Tri-alkylphenyl, $R_3$ zusätzlich den Rest einer Dimerfettsäure, der Maleinsäure, der Bernsteinsäure oder einer $C_9$-$C_{18}$-Alkenylbernsteinsäure und x Zahlen von 4 bis 16 bedeuten, zur Verbesserung der Fließfähigkeit von Rohölen.

**7.** Verwendung von Mischungen nach Anspruch 3 aus 10 bis 90 Gew.-% eines Copolymers nach Anspruch 1 und 90 bis 10 Gew.-% eines Poly(meth)acrylsäure-$C_{14}$-$C_{22}$-alkylesters zur Verbesserung der Fließfähigkeit von Rohölen.

**8.** Verwendung von Mischungen nach Anspruch 4 aus 20 bis 40 Gew.-% eines Copolymers nach Anspruch 1 und 80 bis 60 Gew.-% eines Poly(meth)acrylsäure-$C_{14}$-$C_{22}$-alkylesters zur Verbesserung der Fließfähigkeit von Rohölen.

## Claims

**1.** A copolymer composed of
50 to 99.9% by weight of a $C_{14}$-$C_{22}$-alkyl (meth)acrylate and
50 to 0.1% by weight of a comonomer of the formula 1

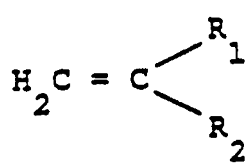

(1)

in which $R_1$ is hydrogen or methyl,
$R_2$ is a group of the formulae

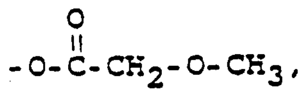, 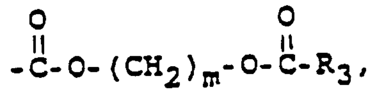,

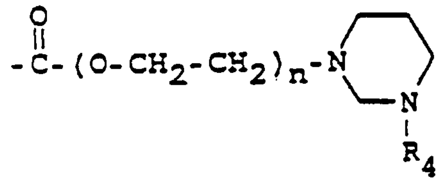 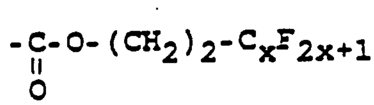,

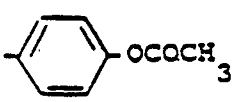, $-CH_2-O-C_2HF_4$, 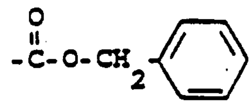 or

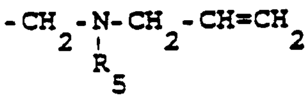, 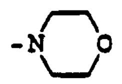, 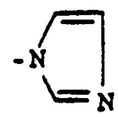 or 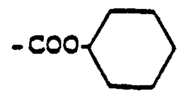

$R_3$ is $C_1$-$C_{80}$-alkyl, $C_2$-$C_{80}$-alkenyl, $C_5$- or $C_6$-cycloalkyl -or cycloalkenyl which can each be substituted by alkyl groups, or is aralkyl, alkaryl or the radical of a dimeric fatty acid, of maleic acid, of succinic acid or of a $C_6$-$C_{22}$-alkenylsuccinic acid,
$R_4$ is $C_1$-$C_{80}$-alkyl, $C_1$-$C_{80}$-alkenyl, $C_5$- or $C_6$-cycloalkyl or -cycloalkenyl which can each be substituted by alkyl groups, or is aryl, aralkyl or alkaryl,
$R_5$ is $C_6$-$C_{20}$-alkyl,
m is 2 or 3,
n is a number from 1 to 30 and
x is a number from 2 to 20,
and mixtures of such a copolymer with $C_{14}$-$C_{22}$-alkyl poly(meth)acrylates.

**2.** A copolymer as claimed in claim 1, containing a comonomer of the formula (1), in which $R_4$ is $C_6$-$C_{36}$-alkyl, $C_6$-$C_{36}$-alkenyl, cyclohexyl, cyclohexenyl, naphthenyl, phenyl, benzyl, $C_1$-$C_4$-mono-, -di- or -tri-alkylphenyl or $R_3$ can also be the radical of a dimeric fatty acid, of maleic acid, of succinic acid or of a $C_9$-$C_{18}$-alkenylsuccinic acid, and x is a number from 4 to 16.

**3.** A mixture of 10 to 90% by weight of a copolymer as claimed in claim 1 and 90 to 10% by weight of a $C_{14}$-$C_{22}$-alkyl poly(meth)acrylate.

**4.** A mixture of 20 to 40% by weight of a copolymer as claimed in claim 1 and 80 to 60% by weight of a $C_{14}$-$C_{22}$-alkyl poly(meth)acrylate.

**5.** The use of a copolymer composed of 50 to 99.9% by weight of a $C_{14}$-$C_{22}$-alkyl (meth) acrylate and 50 to 0.1% by weight of a comonomer of the formula 2

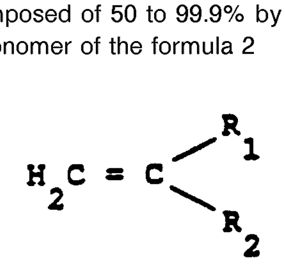 (2)

in which $R_1$ is hydrogen or methyl,
$R_2$ is a group of the formulae

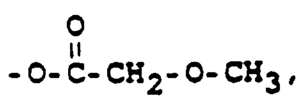 , 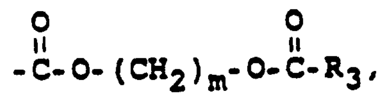 ,

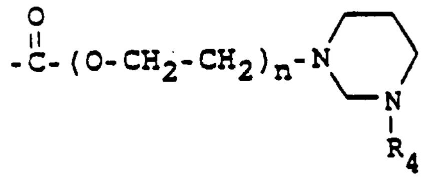 , 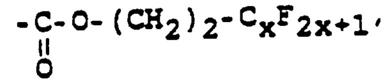 ,

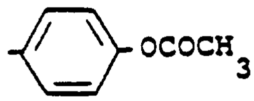 , 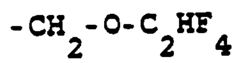 , 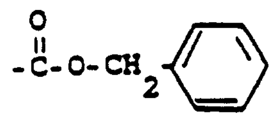 ,

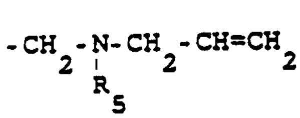 , 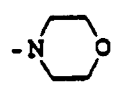 , 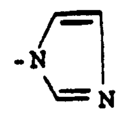 or 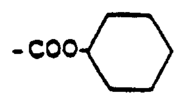

$R_3$ is $C_1$-$C_{80}$-alkyl, $C_2$-$C_{80}$-alkenyl, $C_5$- or $C_6$-cycloalkyl or -cycloalkenyl which can each be substituted by alkyl groups, or is aralkyl, alkaryl or the radical of a dimeric fatty acid, of maleic acid, of succinic acid or of a $C_6$-$C_{22}$-alkenylsuccinic acid,
$R_4$ is $C_1$-$C_{80}$-alkyl, $C_1$-$C_{80}$-alkenyl, $C_5$- or $C_6$-cycloalkyl or -cycloalkenyl which can each be substituted by alkyl groups, or is aralkyl or alkaryl,
$R_5$ is $C_6$-$C_{20}$-alkyl,
m is 2 or 3,
n is a number from 1 to 30 and
x is a number from 2 to 20,
and of mixtures of such a copolymer with $C_{14}$-$C_{22}$-alkyl poly(meth)acrylates for improving the fluidity of crude oils.

**6.** The use of a copolymer as claimed in claim 5, containing a comonomer of the formula (1), in which $R_3$ and $R_4$ are $C_6$-$C_{36}$-alkyl, $C_6$-$C_{36}$-alkenyl, cyclohexyl, cyclohexenyl, naphthenyl, phenyl, benzyl or $C_1$-$C_4$-mono-,-di- or -tri-alkylphenyl, or $R_3$ can additionally be the radical of a dimeric fatty acid, of maleic acid, of succinic acid or of a $C_9$-$C_{18}$-alkenyl-succinic acid, and x is a number from 4 to 16, for improving the fluidity of crude oils.

**7.** The use of a mixture as claimed in claim 3 of 10 to 90% by weight of a copolymer as claimed in claim 1 and 90 to 10% by weight of a $C_{14}$-$C_{22}$-alkyl poly(meth)acrylate for improving the fluidity of crude oils.

**8.** The use of a mixture as claimed in claim 4 of 20 to 40% by weight of a copolymer as claimed in claim 1 and 80 to 60% by weight of a $C_{14}$-$C_{22}$-alkyl poly(meth)acrylate for improving the fluidity of crude oils.

## Revendications

**1.** Copolymères formés de
50 à 99,9 % en poids d'un acrylate ou méthacrylate d'alkyle en $C_{14}$-$C_{22}$ et de
50 à 0,1 % en poids d'un comonomère de formule 1

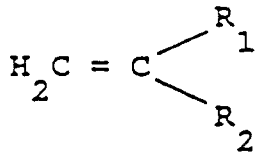

(1)

dans laquelle
$R_1$ représente l'hydrogène ou le groupe méthyle et
$R_2$ un groupe de formule

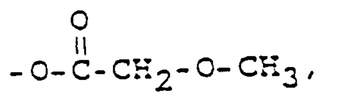 , 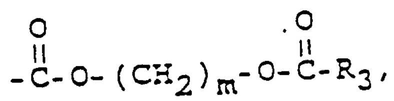 ,

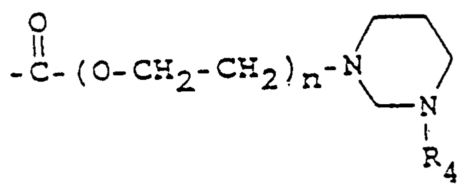 , 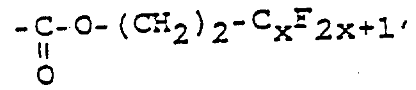 ,

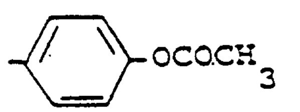 , 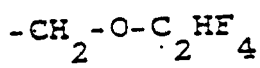 , 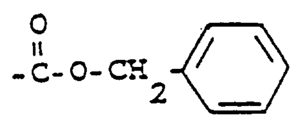 ,

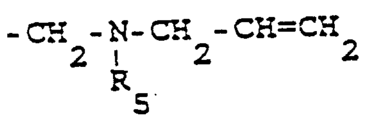 , 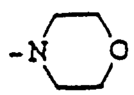 , 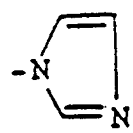 ou 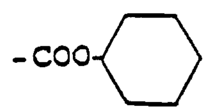 ,

$R_3$ étant un alkyle en $C_1$-$C_{80}$, un alcényle en $C_2$-$C_{80}$, un cycloalkyle ou un cycloalcényle en $C_5$ ou $C_6$, qui peuvent avoir des alkyles comme substituants, ou encore un aralkyle, un alcaryle ou le radical d'un acide gras dimère, de l'acide maléique, de l'acide succinique ou d'un acide $C_6$-$C_{22}$-alcénylsuccinique,
$R_4$ un alkyle en $C_1$-$C_{80}$, un alcényle en $C_2$-$C_{80}$, un cycloalkyle ou un cycloalcényle en $C_5$ ou $C_6$, qui peuvent avoir des alkyles comme substituants, ou encore un aryle, un aralkyle ou un alcaryle,
$R_5$ un alkyle en $C_6$-$C_{20}$,
m le nombre 2 ou 3,
n un nombre de 1 à 30 et
x un nombre de 2 à 20,
et mélanges de ces copolymères avec des polyacrylates ou des polyméthacrylates d'alkyles en $C_{14}$-$C_{22}$.

2. Copolymères selon la revendication 1 comprenant un comonomère de formule (1) dans lequel $R_4$ est un alkyle ou un alcényle en $C_6$-$C_{36}$, un cyclohexyle, un cyclohexényle, un naphtényle, un phényle, un benzyle ou un mono-, di- ou tri-alkylphényle à alkyles en $C_1$-$C_4$, ou bien $R_3$ est aussi le radical d'un acide gras dimère, de l'acide maléique, de l'acide succinique ou d'un acide $C_9$-$C_{18}$-alcénylsuccinique, et x est un nombre de 4 à 16.

3. Mélanges de 10 à 90 % en poids d'un copolymère de la revendication 1 avec de 90 à 10 % en poids d'un polyacrylate ou d'un polyméthacrylate d'alkyle en $C_{14}$-$C_{22}$.

4. Mélanges de 20 à 40 % en poids d'un coplymère de la revendication 1 avec de 80 à 60 % d'un polyacrylate ou d'un polyméthacrylate d'alkyle en $C_{14}$-$C_{22}$.

5. L'emploi de copolymères formés de 50 à 99,9 % en poids d'un acrylate ou méthacrylate d'alkyle en $C_{14}$-$C_{22}$ et de 50 à 0,1 % en poids d'un comonomère de formule (2)

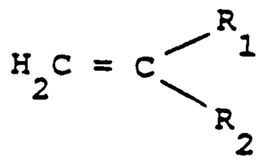 (2)

dans laquelle
$R_1$ représente l'hydrogène ou le groupe méthyle et
$R_2$ un groupe de formule

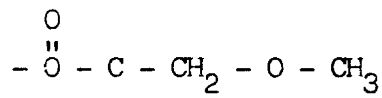

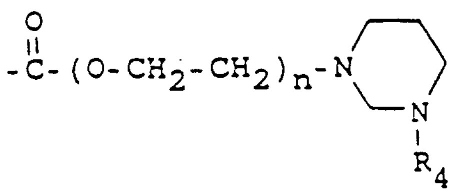 , 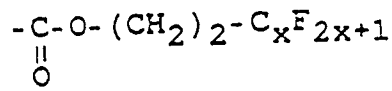

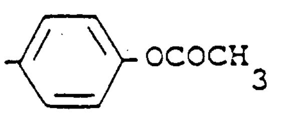 , $-CH_2-O-C_2HF_4$ , 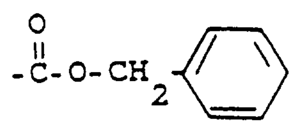 ,

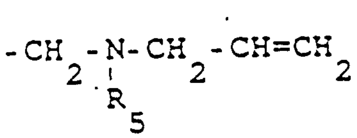 , 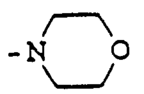 , 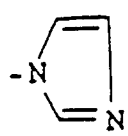 ou 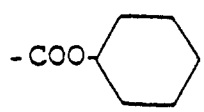

$R_3$ étant un alkyle en $C_1$-$C_{80}$, un alcényle en $C_2$-$C_{80}$, un cycloalkyle ou un cycloalcényle en $C_5$ ou $C_6$, qui peuvent avoir des alkyles comme substituants, ou encore un aralkyle, un alcaryle ou le radical d'un acide gras dimère, de l'acide maléique, de l'acide succinique ou d'un acide $C_6$-$C_{22}$-alcénylsuccinique
$R_4$ un alkyle en $C_1$-$C_{80}$, un alcényle en $C_2$-$C_{80}$, un cycloalkyle ou un cycloalcényle en $C_5$ ou $C_6$, qui peuvent avoir des alkyles comme substituants, ou encore un aryle, un aralkyle ou un alcaryle,
$R_5$ un alkyle en $C_6$-$C_{20}$,
m le nombre 2 ou 3,
n un nombre de 1 à 30 et
x un nombre de 2 à 20,
et mélanges de ces copolymères avec des polyacrylates ou des polyméthacrylates d'alkyles en $C_{14}$-$C_{22}$,pour améliorer la fluidité de pétroles bruts.

6. L'emploi de copolymères selon la revendication 5, comprenant un comonomère de formule 1 dans lequel $R_3$ et $R_4$ sont des alkyles ou alcényles en $C_6$-$C_{36}$, des cyclohexyles, cyclohexényles, naphtényles, phényles, benzyles ou mono-, di- ou tri-alkylphényles à alkyles en $C_1$-$C_4$, $R_3$ pouvant être en outre le radical d'un acide gras dimère, de l'acide maléique, succinique ou d'un acide $C_9$-$C_{18}$-alcénylsuccinique, et x est un nombre de 4 à 16, pour améliorer la fluidité de pétroles bruts.

7. Emploi de mélanges selon la revendication 3, de 10 à 90 % en poids d'un copolymère de la revendication 1 avec de 90 à 10 % d'un polyacrylate ou polyméthacrylate d'alkyle en $C_{14}$-$C_{22}$, pour améliorer la fluidité de pétroles bruts.

8. Emploi de mélanges selon la revendication 4, de 20 à 40 % en poids d'un copolymère selon la revendication 1 avec de 80 à 60 % d'un polyacrylate ou polyméthacrylate d'alkyle en $C_{14}$-$C_{22}$, pour améliorer la fluidité de pétroles Bruts.